# EUROPÄISCHE PATENTSCHRIFT

(11) **EP 3 642 505 B1**
(45) Veröffentlichungstag und Bekanntmachung des Hinweises auf die Patenterteilung: **20.10.2021**
(21) Anmeldenummer: 18753315.3
(22) Anmeldetag: 11.06.2018
(51) Int. Cl.: F16D 1/08

(54) **VERBINDUNG, AUFWEISEND EINE IN EINE HOHLWELLE ZUMINDEST TEILWEISE EINGESTECKTE WELLE UND EIN AUF DIE HOHLWELLE AUFGESTECKTES RINGTEIL UND PLANETENGETRIEBE**
JOINT CONNECTION HAVING A SHAFT AT LEAST PARTIALLY INSERTED IN A HOLLOW SHAFT AND A RING PART PLACED AROUND THE HOLLOW SHAFT AND A PLANETARY GEAR
LIAISON CONJOINTE AYANT UN ARBRE AU MOINS PARTIELLEMENT INSÉRÉ DANS UN ARBRE CREUX ET UNE BAGUE PLAQUÉE AUTOUR DE L'ARBRE CREUX ET UN ENGRENAGE PLANÉTAIRE

(30) Priorität: 22.06.2017 DE 102017005895
(43) Veröffentlichungstag der Anmeldung: 29.04.2020
(73) Patentinhaber: SEW-EURODRIVE GmbH & Co. KG, 76646 Bruchsal (DE)
(72) Erfinder: HALLER, Sascha, 76135 Karlsruhe (DE); SCHILLINGER, Jens, 76437 Rastatt (DE); DENKHAUS, Max, 76698 Ubstadt-Weiher (DE)
(86) Internationale Anmeldenummer: PCT/EP2018/025156
(87) Internationale Veröffentlichungsnummer: WO 2019/015803

(56) Entgegenhaltungen:
- DE-A1-102013 100 129
- DE-B3-102004 011 361
- DE-U1-202013 105 568
- FR-A- 328 479
- GB-A- 590 038

## Beschreibung

Die Erfindung betrifft eine Verbindung, aufweisend eine in eine Hohlwelle zumindest teilweise eingesteckte Welle und ein auf die Hohlwelle aufgestecktes Ringteil und ein Planetengetriebe.

Es ist allgemein bekannt, dass bei einem Spannring, eine kraftschlüssige Verbindung mittels eines Ringteils herstellbar ist.

Aus der DE 20 2013 105 568 U1 ist als nächstliegender Stand der Technik eine Befestigungsvorrichtung zum konzentrischen Befestigen einer Welle an eine Drehgeberwelle und Motorfeedback-System mit dieser Befestigung bekannt.

Aus der GB 590 038 A ist ein Klemmring mit einer einzigen Verdickung am Umfang bekannt.

Aus der DE 10 2004 011361 B3 ist eine Verbindung einer geschlitzten Hohlwelle mit einer Welle bekannt.

Aus der FR 328 479 A ist ein unrunder Klemmring bekannt.

Aus der DE 10 2013 100129 A1 ist eine Vorrichtung zur Klemmung einer Nabe auf einer Welle bekannt.

Der Erfindung liegt daher die Aufgabe zugrunde, eine Verbindung weiterzubilden, wobei die Verbindung auf der schnell drehenden, also eintreibenden, Seite eines Planetengetriebes verwendbar ist.

Erfindungsgemäß wird die Aufgabe bei der Verbindung nach den in Anspruch 1 und bei dem Planetengetriebe nach den in Anspruch 15 angegebenen Merkmalen gelöst.

Von Vorteil ist dabei, dass die Verbindung ausgewuchtet ist. Denn das Ringteil, insbesondere zusammen mit einem zugehörigen Schraubteil, wird dadurch auswuchtbar, dass die Verdickungen eine ausgewuchtete Struktur bilden. Das Schraubteil selbst ist in einer der Verdickungen angeordnet. Des Weiteren ist die kraftschlüssige Verbindung mittels Anziehen des Schraubteils und somit bewirktem Aufschrumpfen des Ringteils auf die Hohlwelle effektiv ausführbar. Also ist mit geringem Aufwand an Masse für das Ringteil ein hohes Verbindungsmoment erreichbar.

Bei einer vorteilhaften Ausgestaltung weist eine der Verdickungen eine radial durchgehende Gewindebohrung auf, in welche ein Schraubteil, insbesondere Madenschraube und/oder Gewindestift, eingeschraubt ist, welches auf die Hohlwelle drückt, insbesondere auf eine an der Hohlwelle aufgebrachte Abflachung. Von Vorteil ist dabei, dass eine hohe Stabilität des Ringteils unter geringem Aufwand an Masse erreichbar ist.

Bei einer vorteilhaften Ausgestaltung sind alle Verdickungen auf demselben Radialabstand angeordnet. Von Vorteil ist dabei, dass ein Auswuchten in einfacher Weise ermöglicht ist.

Bei einer vorteilhaften Ausgestaltung sind die Verdickungen in Umfangsrichtung regelmäßig voneinander beabstandet sind. Von Vorteil ist dabei, dass ein Auswuchten schon durch die Formgebung beim Herstellen bewirkbar ist.

Bei einer vorteilhaften Ausgestaltung ist die Anzahl der Verdickungen ungerade, insbesondere so dass diametral gegenüberliegend zur die Gewindebohrung aufnehmenden Verdickung keine Verdickung vorhanden ist.

Von Vorteil ist dabei, dass infolge der regelmäßigen Beabstandung und der ungeraden Anzahl der Gewindebohrung diametral gegenüber keine Verdickung angeordnet ist. Das Auswuchten muss also mit einer ungeraden Anzahl von Massen ausgeführt werden, so dass höhere Momente notwendig sind.

Bei einer vorteilhaften Ausgestaltung ist kein von einer der Verdickungen überdeckter Umfangswinkelbereich vollständig von dem um 180° in Umfangsrichtung versetzten, von dem Schraubteil überdeckten Umfangswinkelbereich umfasst. Von Vorteil ist dabei, dass diametral zur Gewindebohrung keine Verdickung vorhanden ist. Somit ist nur ein Auswuchten mit höherem als mit dem zweiten Moment ermöglicht.

Bei einer vorteilhaften Ausgestaltung weisen alle Verdickungen dieselbe axiale Breite und dieselbe Ausdehnung in Umfangsrichtung auf,

insbesondere wobei alle Verdickungen mit Ausnahme der die Gewindebohrung aufnehmenden Verdickung dieselbe geometrische Form aufweisen. Von Vorteil ist dabei, dass eine einfache Herstellung ermöglicht ist.

Bei einer vorteilhaften Ausgestaltung ist die radiale Breite des Ringteils im von einer jeweiligen Verdickung überdeckten Umfangswinkelbereich größer als in einem anderen Umfangswinkelbereich. Von Vorteil ist dabei, dass eine einfache Herstellung ermöglicht ist und der Wellenbund als plane Fläche ausbildbar und am Ringteil als flächig berührende Begrenzungsfläche verwendbar ist.

Bei einer vorteilhaften Ausgestaltung ist der größte Radialabstand der die Gewindebohrung aufnehmenden Verdickung größer als der jeweilige größte Radialabstand aller anderen Verdickungen. Von Vorteil ist dabei, dass eine einfache Herstellung ausführbar ist. Dabei muss für das Auswuchten kein separater Herstellverfahrensschritt ausgeführt werden.

Bei einer vorteilhaften Ausgestaltung drückt das Schraubteil auf eine Abflachung der Hohlwelle, also auf einen abgeflachten insbesondere ebenen Bereich an der Außenseite der Hohlwelle. Von Vorteil ist dabei, dass die Berührverhältnisse zwischen Schraubteil und Hohlwelle wohldefiniert sind.

Bei einer vorteilhaften Ausgestaltung überlappt der vom in die Hohlwelle eingesteckten Bereich der Welle überdeckte axiale Bereich mit dem vom Ringteil überdeckten axialen Bereich. Von Vorteil ist dabei, dass die Hohlwelle auf die in die Hohlwelle eingesteckte Welle aufschrumpfbar ist.

Bei einer vorteilhaften Ausgestaltung weist die Hohlwelle einen geschlitzten Bereich auf, welcher die Schlitze aufweist. Von Vorteil ist dabei, dass die Hohlwelle im geschlitzten Bereich elastischer ist als im sonstigen Bereich.

Bei einer vorteilhaften Ausgestaltung sind die Schlitze der Hohlwelle in Umfangsrichtung regelmäßig voneinander beabstandet. Von Vorteil ist dabei, dass eine einfache Herstellung ermöglicht ist. Außerdem ist die Abflachung diametral gegenüberliegend von einem der Schlitze an der Hohlwelle anordenbar.

Bei einer vorteilhaften Ausgestaltung sind die Schlitze durch die Hohlwelle, insbesondere durch die Wandung der Hohlwelle, radial durchgehend ausgeführt und/oder axial gerichtet. Von Vorteil ist dabei, dass eine hohe Elastizität erreichbar ist.

Bei einer vorteilhaften Ausgestaltung ist die Anzahl der Schlitze drei oder größer. Von Vorteil ist dabei, dass eine unwuchtfreie Anordnung der Schlitze ausführbar ist, insbesondere durch regelmäßige Beabstandung der Schlitzte in Umfangsrichtung.

Bei einer vorteilhaften Ausgestaltung ist die Abflachung am Umfang der Hohlwelle diametral zu einem der Schlitze angeordnet und/oder der Mittelpunkt des von der Abflachung überdeckten Umfangswinkelbereichs ist 180° in Umfangsrichtung entfernt vom Mittelpunkt des von einem der Schlitze überdeckten Umfangswinkelbereichs. Von Vorteil ist dabei, dass eine Dreipunkt-Berührung am Umfang der Hohlwelle zwischen Hohlwelle und Ringteil bewirkbar ist. Dabei drückt das Schraubteil an einer ersten Umfangsposition auf die Hohlwelle. An zwei in Umfangsrichtung durch den an der Hohlwelle angeordneten, diametral der ersten Umfangsposition gegenüberliegenden Schlitz getrennten Umfangspositionen drückt die Hohlwelle auf das Ringteil. Somit liegt eine Dreipunktberührung vor. Ebenso drückt die Hohlwelle die in sie eingesteckte Welle, also aufschrumpfend.

Bei einer vorteilhaften Ausgestaltung weist die Hohlwelle einen konstanten Außendurchmesser auf. Von Vorteil ist dabei, dass das Ringteil mittels einer einfach herstellbaren Fase außerhalb des geschlitzten Bereichs der Hohlwelle von der Hohlwelle beabstandbar ist.

Bei einer vorteilhaften Ausgestaltung berührt der von der Fase überdeckte axiale Bereich den vom Bund überdeckten axialen Bereich und/oder grenzt an diesen an. Von Vorteil ist dabei, dass der zum Bund benachbarte Bereich keine Berührfläche zwischen Ringteil und Hohlwelle aufweist. Somit ist in diesem Bereich, der an den geschlitzten Bereich angrenzt, ein Abstand zwischen Ringteil und Hohlwelle vorhanden. Auf diese Weise leitet das Ringteil die gesamte Aufschrumpfkraft in den geschlitzten Bereich ein und nicht in den axial zwischen Bund und geschlitztem Bereich angeordneten Bereich.

Bei einer vorteilhaften Ausgestaltung ist die Wandstärke und/oder der Querschnitt des Ringteils unabhängig vom Umfangswinkel. Von Vorteil ist dabei, dass das Auswuchten in einfacher Weise durch eine Radialbohrung ausführbar ist.

Bei einer vorteilhaften Ausgestaltung ist die Fase als konusförmige Fase ausgeführt oder als krümmungskegelförmige Fase oder als Stufenfase. Von Vorteil ist dabei, dass eine konusförmige Fase einfach herstellbar ist. Hingegen bewirkt die krümmungskegelige Fase eine höhere Festigkeit, weil der Übergang vom Bereich der Fase zum restlichen Bereich festigkeitsoptimiert ausbildbar ist. Die Stufenfase ist ähnlich einer Stufenbohrung sehr einfach und kostengünstig herstellbar, wobei die Beabstandung des Ringteils von der Hohlwelle im gesamten Bereich zwischen Bund und geschlitztem Bereich der Hohlwelle sicher gewährleistbar ist.

Bei einer vorteilhaften Ausgestaltung weist das Ringteil des Spannrings an seiner Innenseite die Fase auf, so dass das Ringteil von der Hohlwelle in dem von der Fase überdeckten axialen Bereich beabstandet ist, wobei der von der Fase überdeckte axiale Bereich sich anschließt an einen geschlitzten Bereich der Hohlwelle, so dass die Schrumpfkraft des Ringteils in den geschlitzten Bereich der Hohlwelle eingetragen wird, nicht aber in den von der Fase überdeckten axialen Bereich. Von Vorteil ist dabei, dass das Ringteil mit weniger Masse ausführbar und somit einfach auswuchtbar ist.

Wichtige Merkmale bei dem Planetengetriebemotor sind, dass die Rotorwelle des das Planetengetriebe antreibenden Elektromotors in eine als Hohlwelle ausgeführte eintreibende Welle eingesteckt ist,
wobei ein Ringteil auf die Hohlwelle aufgesteckt ist,
so, dass die Welle mit der Hohlwelle mittels des Ringteils durch eine vorgenannte Verbindung verbunden ist.

Von Vorteil ist dabei, dass der Spannring an der eintreibenden Seite des Planetengetriebes anordenbar ist. Somit ist an der schnell drehenden Seite eine kraftschlüssige Verbindung bewirkbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine Seitenansicht auf einen ersten Spannring einer erfindungsgemäßen Verbindung, insbesondere Welle-Nabe Verbindung, eines Planetengetriebemotors dargestellt.
In der Figur 2 ist eine zugehörige Schrägansicht dargestellt.
In der Figur 3 ist ein die Ringachse des Spannrings enthaltender Längsschnitt durch den Spannring dargestellt.
In der Figur 4 ist eine Schrägansicht auf einen Bereich einer Hohlwelle 40 dargestellt.
In der Figur 5 ist eine Schrägansicht auf den auf die Hohlwelle 40 aufgeschobenen Spannring dargestellt.
In der Figur 6 ist ein zu Figur 5 zugehöriger Längsschnitt dargestellt.
In der Figur 7 ist eine Schrägansicht auf einen zweiten Spannring dargestellt, der sich nur in einer anstatt der konusförmigen Fase 3 anders ausgeführten Fase 80 unterscheidet vom ersten Spannring.
In der Figur 8 ist ein zur Figur 7 gehöriger, die Ringachse enthaltender Querschnitt durch den zweiten Spannring dargestellt.
In der Figur 9 ist eine Schrägansicht auf einen dritten Spannring dargestellt, der sich nur in einer anstatt der konusförmigen Fase 3 anders ausgeführten Fase 100 unterscheidet vom ersten Spannring und zweiten Spannring.
In der Figur 10 ist ein zur Figur 9 gehöriger, die Ringachse enthaltender Querschnitt durch den dritten Spannring dargestellt.

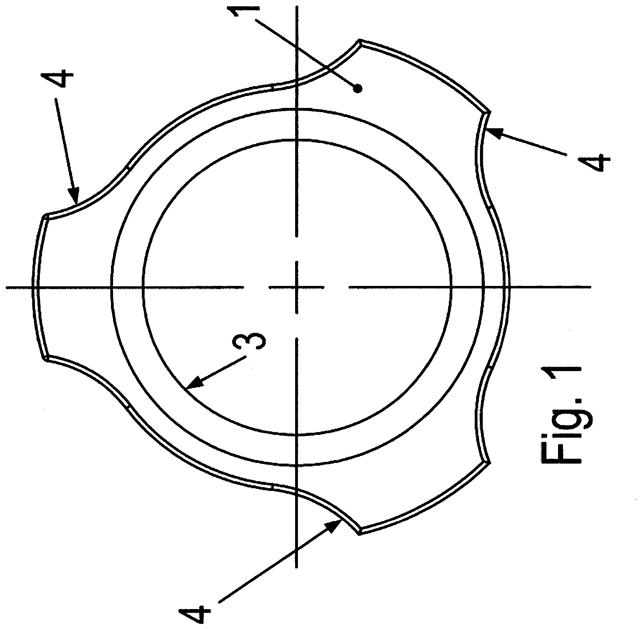

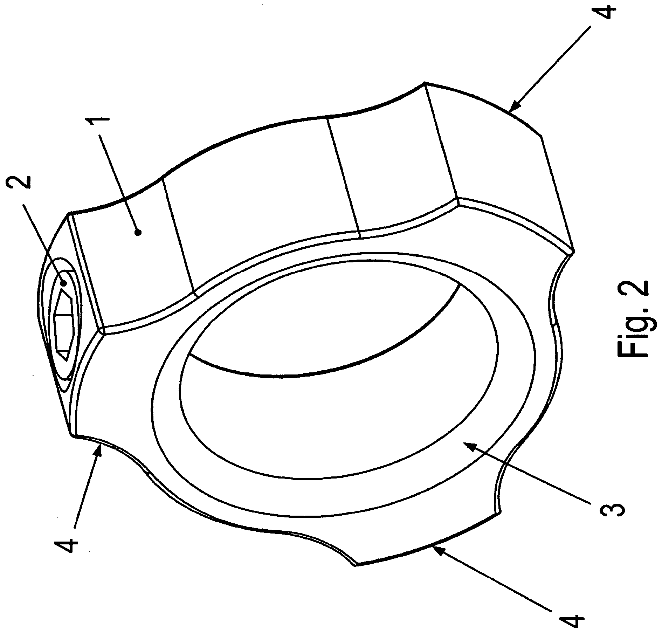

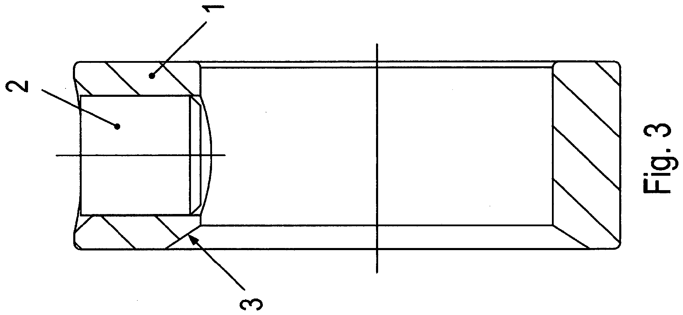

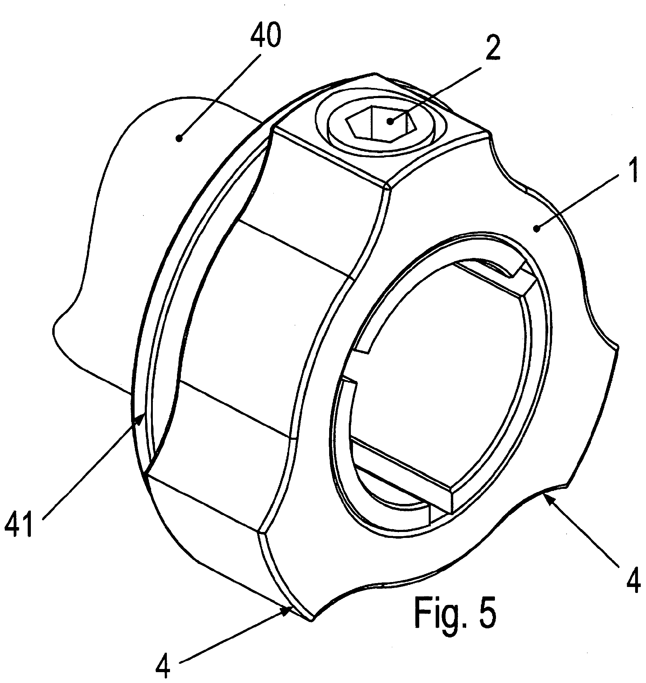

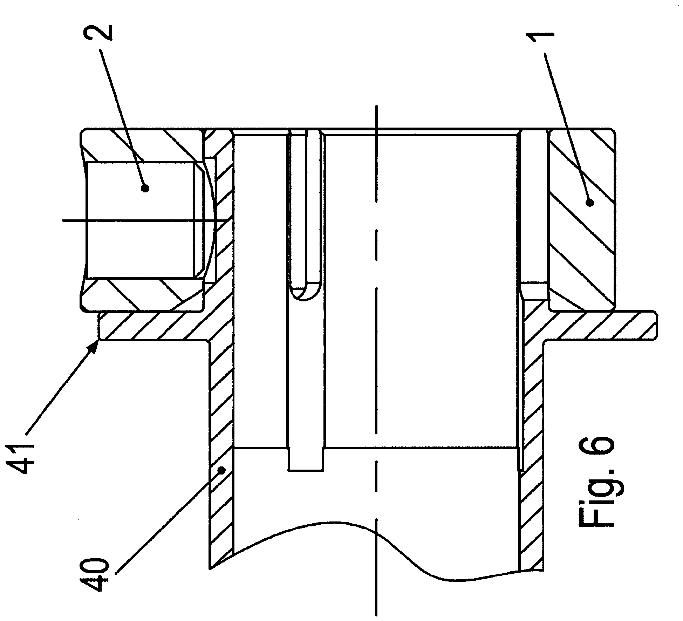

Wie in Figur 1 bis Figur 7 dargestellt, weist der Spannring ein in Umfangsrichtung nicht unterbrochenes Ringteil 1 auf, wobei das Ringteil 1 unrund ausgeführt ist und hierfür radial hervorstehende Verdickungen 4 aufweist, die in Umfangsrichtung regelmäßig voneinander beabstandet sind.

Ein Schraubteil 2 ist in eine radial durchgehende Gewindebohrung des Ringteils 1 eingeschraubt und drückt auf eine an der Hohlwelle 40 ausgebildete Abflachung 42. Hierbei ist die insbesondere ebene Abflachung 42 tangential ausgerichtet.

Die Gewindebohrung für das Schraubteil ist in einer ersten der Verdickungen 4 vorgesehen. Somit ist genügend Material zur Aufnahme der Gewindebohrung vorhanden und daher die Verbindung mit dem Schraubteil 2 belastbar.

Durch Einschrauben des Schraubteils 2 in die Gewindebohrung ist die Hohlwelle 40 von der Gewindebohrung weggedrückt. Somit wird also die Hohlwelle 40 an in Umfangsrichtung von der Abflachung 42 beabstandeten Bereichen an das Ringteil 1 angedrückt. Auf diese Weise wird ein Aufschrumpfen der Hohlwelle 40 auf die in die Hohlwelle 40 eingesteckte Welle ermöglicht.

Am Außenumfang der Hohlwelle 40 ist in einem axialen Bereich ein Bund 41 an der Hohlwelle 40 angeformt. Somit steht dieser Bund 41, insbesondere Bundkragen, radial hervor.

Das Ringteil 1 liegt am Bund 41 an und ist somit axial zum Bund 41 hin begrenzt.

Das Ringteil 1 ist in demjenigen axialen Bereich auf die Hohlwelle 40 aufgesteckt, welcher sich vom Bund 41 bis zum ersten axialen Endbereich erstreckt.

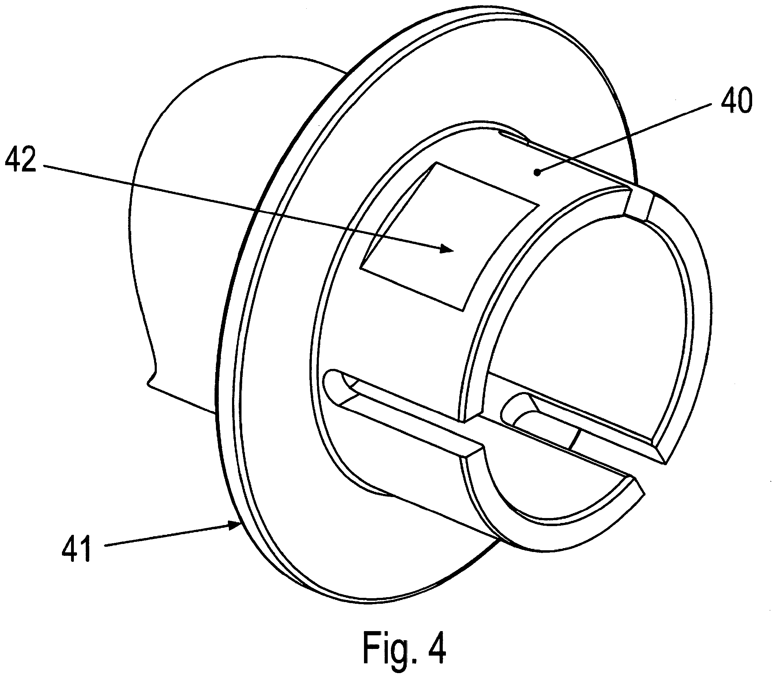

Die Hohlwelle 40 weist axial sich erstreckende, radial durch die Wandung durchgehende Schlitze auf. Dabei sind die Schlitze in Umfangsrichtung regelmäßig voneinander beabstandet. In Figur 4 sind hierzu drei Schlitze vorgesehen, welche einen Umfangswinkelabstand von 120° zueinander aufweisen.

Die Schlitze erstrecken sich vom ersten axialen Endbereich der Hohlwelle 40 bis zu einer axialen Position, welche einen nicht verschwindenden Abstand zum Bund 41 aufweist.

Beim Einschrauben des Schraubteils 2 in die Gewindebohrung wird, wie oben beschrieben, die Hohlwelle 40 von der Gewindebohrung des Ringteils 1 weggedrückt. Dabei wird dann also die Hohlwelle 40 gegen die Innenwandung des Ringteils in den in Umfangsrichtung beabstandeten Umfangswinkelbereichen gedrückt. Somit werden die drei in Umfangsrichtung zwischen den Schlitzen der Hohlwelle 40 angeordneten Bereiche radial zusammengedrückt, also radial nach innen gedrückt. Die Hohlwelle 40 zieht sich also radial zusammen und drückt somit auf die in den Figuren nicht gezeigte Welle, welche in der Hohlwelle 40 eingesteckt angeordnet ist.

Da die axial sich erstreckenden Schlitze in der Hohlwelle 40 vom Bund beabstandet sind, wird die Hohlwelle 40 in dem von den Schlitzen überdeckten axialen Bereich stärker verformt als in dem zwischen dem Bund 41 und dem von den Schlitzen überdeckten axialen Bereich angeordneten axialen Bereich.

Das Ringteil 1 weist eine konische Fase 3 auf, welche an der dem Bund 41 und der Hohlwelle 40 zugewandten Innenkante des Ringteils 1 angeordnet ist. Somit ist die Schrumpfwirkung im von den Schlitzen der Hohlwelle 40 überdeckten axialen Bereich ungestört. Denn in dem axialen Bereich zwischen Bund 41 und dem von den Schlitzen überdeckten axialen Bereich berührt das Ringteil 1 die Hohlwelle 40 nicht.

Es ist also ein Freiraum zwischen Hohlwelle 40 und Ringteil 1 mittels der Fase 3 gebildet. Somit ist beim Aufschrumpfen des Ringteils 1 auf die Hohlwelle 40 der Druck auf den geschlitzten axialen Bereich der Hohlwelle 40 aufgebracht, nicht aber auf den ungeschlitzten Bereich, insbesondere welcher an den Bund 41 angrenzt.

Das Ringteil 1 weist keine dem Schraubteil 2 gegenüberliegend angeordnete Auswuchtbohrung auf.

Allerdings weist das Ringteil 1 die Verdickungen 4 auf, wobei deren Anzahl ungerade ist. Bei dem in den Figuren gezeigten Ausführungsbeispiel beträgt die Anzahl drei.

Wegen der ungeraden Anzahl und der regelmäßigen Beabstandung der Verdickungen liegt derjenigen Verdickung, in welche die Gewindebohrung für das Schraubteil eingebracht ist, keine Verdickung diametral gegenüber. Das Auswuchten der die Gewindebohrung mit Schraubteil enthaltenden Verdickung erfolgt über die Formgebung der Verdickungen.

Vorzugsweise ist diejenige Verdickung, in welche die Gewindebohrung für das Schraubteil eingebracht ist, radial weiter ausgedehnt als die anderen Verdickungen. Somit ist bei eingeschraubtem Schraubteil eine ausgewuchtete Verbindung, insbesondere ein ausgewuchtetes Ringteil, herstellbar.

Die Verdickungen 4 sind in Umfangsrichtung voneinander regelmäßig beabstandet. Die Schwerpunkte und/oder Mittelpunkte der Verdickungen 4 sind in Umfangsrichtung regelmäßig voneinander beabstandet, also mit 120° bei der in den Figuren gezeigten Anzahl von drei.

Das Schraubteil 2 ist in Umfangsrichtung mittig in der Verdickung 4 angeordnet. Die Verdickungen 4 sind zumindest im Wesentlichen alle auf demselben Radialabstand angeordnet und auch axial in derselben Position. Also ist der jeweils von einer jeweiligen Verdickung 4 überdeckte axiale Bereich, insbesondere dessen Mittelpunkt oder Schwerpunkt, stets derselbe.

Der von den Verdickungen 4 überdeckte axiale Bereich umfasst den von der Fase 3 überdeckten axialen Bereich. Die Verdickungen 4 überdecken jeweils den selben axialen Bereich. Die Fase 3 ist also axial weniger weit ausgedehnt ausgeführt als die Verdickungen 4 und 5.

Alle Verdickungen 4 weisen vorzugsweise die selbe Geometrie auf.

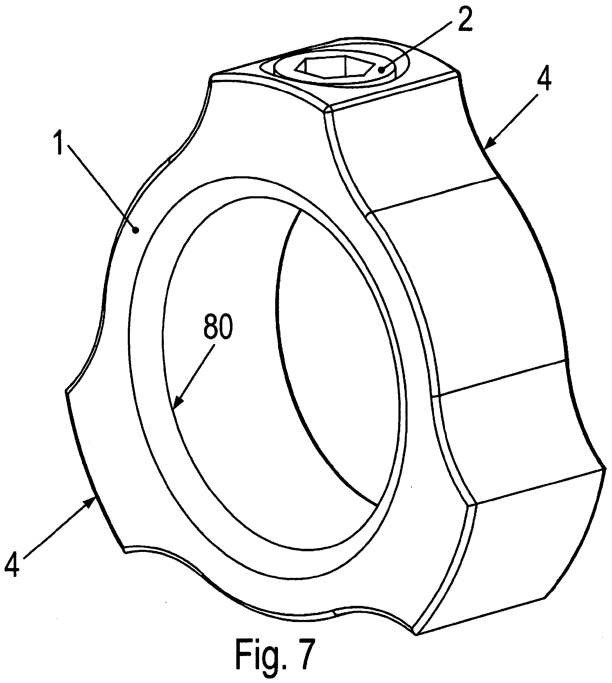

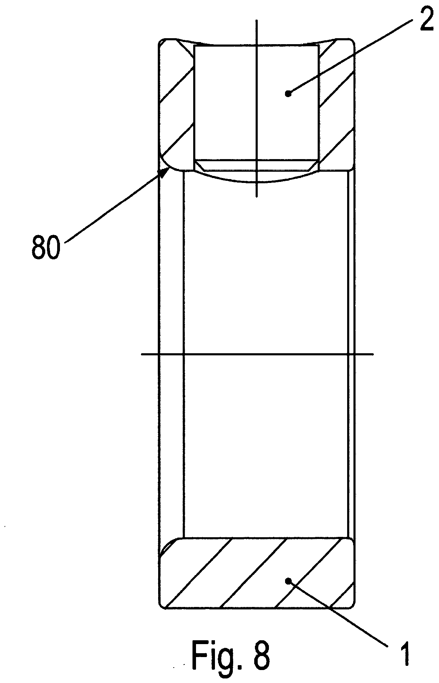

Wie in Figur 8 und Figur 7 dargestellt, ist bei einem zweiten erfindungsgemäßen Ausführungsbeispiel statt der konusförmigen Fase 3, welche als Querschnitt einen Geradenabschnitt aufweist und durch Rotation dieses Geradenabschnitts um die Ringachse des Ringteils 1 darstellbar ist, eine krümmungskegelförmige Fase 80 auf, welche durch Rotation eines gekrümmten Kurvenabschnitts entsteht. Der gekrümmte Kurvenabschnitt ist entweder ein Kreisabschnitt, so dass eine einfache Herstellung ausführbar ist, oder ein Ellipsenabschnitt, so dass eine erhöhte Festigkeit im Übergangsbereich des Ringteils 1 zur Fase 80 hin erreicht ist. In jedem Fall geht die Fase 80 glatt über in den Bereich des Ringteils 1 mit kleinstem Innendurchmesser, also Berührbereich zur Hohlwelle 40 hin.

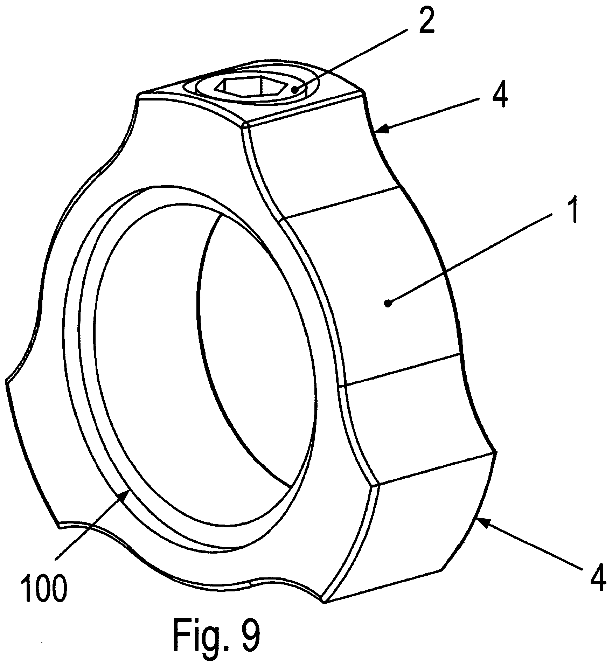

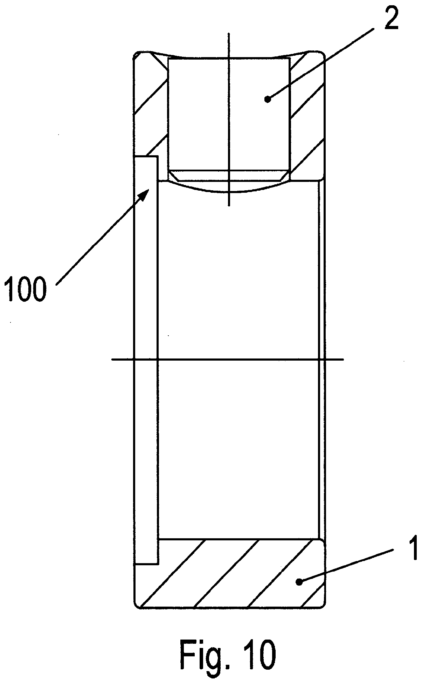

Wie in Figur 10 und Figur 9 dargestellt, ist bei einem dritten erfindungsgemäßen Ausführungsbeispiel statt der konusförmigen Fase 3 des ersten Ausführungsbeispiels und statt der Fase 80 des zweiten Ausführungsbeispiels eine Stufenfase 100, also einem zylindrischen Absatz, ausgeführt. Somit weist das Ringteil 1 im von der Stufenfase 100 überdeckten axialen Bereich einen insbesondere konstanten Innendurchmesser auf, welcher größer ist als der kleinste Innendurchmesser des Ringteils 1. Wichtig ist dabei, dass der im von der Stufenfase 100 überdeckten axialen Bereich vorhandene Innendurchmesser unterschiedlich ist von dem kleinsten Innendurchmesser des Ringteils 1, welchen dieses im Berührbereich zur Hohlwelle 40 hin, also im geschlitzten Bereich der Hohlwelle 40 aufweist.

### Bezugszeichenliste

- 1: Ringteil
- 2: Schraubteil
- 3: konusförmige Fase
- 4: radiale Verdickung
- 40: Hohlwelle
- 41: Bund, insbesondere Bundkragen
- 42: Abflachung
- 80: krümmungskegelförmige Fase
- 100: Stufenfase

## Patentansprüche

1. Verbindung, aufweisend eine in eine Hohlwelle (40) zumindest teilweise eingesteckte Welle
und ein auf die Hohlwelle (40) aufgestecktes Ringteil (1), und zwar eines Spannrings,
wobei das Ringteil (1) axial begrenzt ist von einem an der Hohlwelle (40) ausgeformten,
insbesondere radial hervorstehenden, Bund (41) und/oder das Ringteil (1) an einem oder dem an der Hohlwelle (40) ausgeformten, insbesondere radial hervorstehenden, Bund (41), anliegt,
wobei die Hohlwelle (40) vom Bund (41) beabstandete Schlitze, insbesondere Axialschlitze aufweist,
wobei das Ringteil (1), an seiner Innenseite und/oder an seiner Ringöffnung
und/oder an seinem dem Bund (41) zugewandten axialen Endbereich, eine Fase (3, 80, 100) aufweist,
so dass der Innendurchmesser des Ringteils (1) in dem von der Fase (3,80,100) überdeckten axialen Bereich größer ist als der Innendurchmesser in demjenigen axialen Bereich, in welchem das Ringteil (1) die Hohlwelle (40) berührt,
**dadurch gekennzeichnet, dass**
eine ungerade Anzahl von radial gerichteten Verdickungen am Ringteil ausgeformt sind, so dass der Außenumfang des Ringteils unrund ist,
wobei die Anzahl drei beträgt oder größer als drei ist,
wobei die Verdickungen (4) und/oder die in Umfangsrichtung bestimmten Schwerpunkte oder Mittelpunkte der Verdickungen (4) voneinander in Umfangsrichtung regelmäßig beabstandet sind.

2. Verbindung nach Anspruch 1,
**dadurch gekennzeichnet, dass**
eine der Verdickungen (4) eine radial durchgehende Gewindebohrung aufweist, in welche ein Schraubteil (2),
insbesondere Madenschraube und/oder Gewindestift, eingeschraubt ist, welches auf die Hohlwelle (40) drückt, insbesondere auf eine an der Hohlwelle (40) aufgebrachte Abflachung.

3. Verbindung nach mindestens einem der vorangegangenen Ansprüche,
**dadurch gekennzeichnet, dass**
alle Verdickungen (4) auf demselben Radialabstand angeordnet sind.

4. Verbindung nach mindestens einem der vorangegangenen Ansprüche,
**dadurch gekennzeichnet, dass**
die Verdickungen (4) in Umfangsrichtung regelmäßig voneinander beabstandet sind.

5. Verbindung nach Anspruch 2,
**dadurch gekennzeichnet, dass**
diametral gegenüberliegend zur die Gewindebohrung aufnehmenden Verdickung (4) keine Verdickung (4) vorhanden ist.

6. Verbindung nach Anspruch 2,
**dadurch gekennzeichnet, dass**
kein von einer der Verdickungen (4) überdeckter Umfangswinkelbereich vollständig von dem um 180° in Umfangsrichtung versetzten, von dem Schraubteil (2) überdeckten Umfangswinkelbereich umfasst ist.

7. Verbindung nach mindestens einem der vorangegangenen Ansprüche,
**dadurch gekennzeichnet, dass**
alle Verdickungen (4) dieselbe axiale Breite und dieselbe Ausdehnung in Umfangsrichtung aufweisen,
insbesondere wobei alle Verdickungen (4) mit Ausnahme der die Gewindebohrung aufnehmenden Verdickung (4) dieselbe geometrische Form aufweisen.

8. Verbindung nach mindestens einem der vorangegangenen Ansprüche,
**dadurch gekennzeichnet, dass**
die radiale Breite des Ringteils (1) im von einer jeweiligen Verdickung (4) überdeckten Umfangswinkelbereich größer ist als in einem anderen Umfangswinkelbereich.

9. Verbindung nach Anspruch 2,
**dadurch gekennzeichnet, dass**
der größte Radialabstand der die Gewindebohrung aufnehmenden Verdickung (4) größer ist als der jeweilige größte Radialabstand aller anderen Verdickungen (4) und/oder dass
das Schraubteil (2) auf eine Abflachung der Hohlwelle (40), also einen abgeflachten insbesondere ebenen Bereich an der Außenseite der Hohlwelle (40), drückt.

10. Verbindung nach mindestens einem der vorangegangenen Ansprüche,
**dadurch gekennzeichnet, dass**
der vom in die Hohlwelle eingesteckten Bereich der Welle überdeckte axiale Bereich mit dem vom Ringteil überdeckten axialen Bereich zumindest überlappt und/oder dass
die Hohlwelle (40) einen geschlitzten Bereich aufweist, welcher die Schlitze aufweist und/oder dass
die Schlitze der Hohlwelle (40) in Umfangsrichtung regelmäßig voneinander beabstandet sind.

11. Verbindung nach mindestens einem der vorangegangenen Ansprüche,
**dadurch gekennzeichnet, dass**
die Schlitze durch die Hohlwelle, insbesondere durch die Wandung der Hohlwelle (40), radial durchgehend, axial gerichtet sind, und/oder dass
die Anzahl der Schlitze drei oder größer ist.

12. Verbindung nach mindestens einem der vorangegangenen Ansprüche,
**dadurch gekennzeichnet, dass**
die Abflachung am Umfang der Hohlwelle (40) diametral zu einem der Schlitze angeordnet ist und/oder dass
der Mittelpunkt des von der Abflachung überdeckten Umfangswinkelbereichs 180° in Umfangsrichtung entfernt ist vom Mittelpunkt des von einem der Schlitze überdeckten Umfangswinkelbereichs und/oder dass
die Hohlwelle (40) in dem von dem Ringteil (1) überdeckten axialen Bereich einen konstanten Außendurchmesser aufweist, und/oder dass
der von der Fase (3,80,100) überdeckte axiale Bereich den vom Bund (41) überdeckten axialen Bereich berührt und/oder an diesen angrenzt, und/oder dass
die Wandstärke und/oder der Querschnitt des Ringteils (1) unabhängig vom Umfangswinkel ist.

13. Verbindung nach mindestens einem der vorangegangenen Ansprüche,
**dadurch gekennzeichnet, dass**
die Fase als konusförmige Fase (3) ausgeführt ist oder als krümmungskegelförmige Fase (80) oder als Stufenfase (100).

14. Verbindung nach mindestens einem der vorangegangenen Ansprüche,
**dadurch gekennzeichnet, dass**
das Ringteil (1) von der Hohlwelle (40) in dem von der Fase (3,80,100) überdeckten axialen Bereich beabstandet ist,
insbesondere wobei der von der Fase (3,80,100) überdeckte axiale Bereich sich anschließt an den geschlitzten Bereich der Hohlwelle (40), so dass die Schrumpfkraft des Ringteils (1) in den geschlitzten Bereich der Hohlwelle (40) eingetragen wird, nicht aber in den von der Fase (3,80,100) überdeckten axialen Bereich.

15. Planetengetriebemotor,
wobei die Rotorwelle des das Planetengetriebe antreibenden Elektromotors in eine als Hohlwelle (40) ausgeführte eintreibende Welle eingesteckt ist,
wobei ein Ringteil (1) auf die Hohlwelle (40) aufgesteckt ist, so, dass die Welle mit der Hohlwelle (40) mittels des Ringteils (1) durch eine Verbindung nach mindestens einem der vorangegangenen Ansprüche verbunden ist.

## Claims

1. A connection, having a shaft, at least partially inserted in a hollow shaft (40), and a ring part (1), namely of a clamping ring, placed onto the hollow shaft (40), wherein the ring part (1) is axially bounded by a collar (41), formed on the hollow shaft (40) and in particular radially projecting, and/or the ring part (1) rests against a or the collar (41), formed on the hollow shaft (40) and in particular radially projecting, wherein the hollow shaft (40) has slots, in particular axial slots, spaced apart from the collar (41), wherein the ring part (1) has a bevel (3, 80, 100) at its inside and/or at its ring opening and/or at its axial end region facing the collar (41), so that the inner diameter of the ring part (1) is greater in the axial region covered by the bevel (3, 80, 100) than the inner diameter in that axial region in which the ring part (1) contacts the hollow shaft (40), **characterised in that** an odd number of radially directed thickened portions are formed on the ring part, so that the outer circumference of the ring part is non-round, wherein the number is three or greater than three, wherein the thickened portions (4) and/or the centres of gravity or central points, fixed in the circumferential direction, of the thickened portions (4) are regularly spaced apart from one another in the circumferential direction.

2. A connection according to claim 1, **characterised in that** one of the thickened portions (4) has a radially through-passing tapped bore into which there is screwed a screw part (2), in particular a grub screw and/or threaded pin, which presses onto the hollow shaft (40), in particular onto a flattened portion made at the hollow shaft (40).

3. A connection according to at least one of the preceding claims, **characterised in that** all thickened portions (4) are arranged at the same radial spacing.

4. A connection according to at least one of the preceding claims, **characterised in that** the thickened portions (4) are regularly spaced apart from one another in the circumferential direction.

5. A connection according to claim 2, **characterised in that** no thickened portion (4) is present diametrically opposite the thickened portion (4) receiving the tapped bore.

6. A connection according to claim 2, **characterised in that** no circumferential angular region covered by one of the thickened portions (4) is completely encompassed by the circumferential angular region offset by 180°in the circumferential direction and covered by the screw part (2).

7. A connection according to at least one of the preceding claims, **characterised in that** all thickened portions (4) have the same axial width and the same extension in the circumferential direction, in particular wherein all thickened portions (4) have the same geometric form with the exception of the thickened portion (4) receiving the tapped bore.

8. A connection according to at least one of the preceding claims, **characterised in that** the radial width of the ring part (1) in the circumferential angular region covered by a respective thickened portion (4) is greater than in another circumferential angular region.

9. A connection according to claim 2, **characterised in that** the greatest radial spacing of the thickened portion (4) receiving the tapped bore is greater than the respective greatest radial spacing of all other thickened portions (4) and/or **in that** the screw part (2) presses onto a flattened portion of the hollow shaft (40), therefore a flattened, in particular plane, region at the outer side of the hollow shaft (40).

10. A connection according to at least one of the preceding claims, **characterised in that** the axial region covered by the shaft region inserted in the hollow shaft at least overlaps with the axial region covered by the ring part and/or **in that** the hollow shaft (40) has a slotted region which has the slots and/or **in that** the slots of the hollow shaft (40) are regularly spaced apart from one another in the circumferential direction.

11. A connection according to at least one of the preceding claims, **characterised in that** the slots pass radially though the hollow shaft, in particular through the wall of the hollow shaft (40), and are directed axially and/or **in that** the number of the slots is three or more.

12. A connection according to at least one of the preceding claims, **characterised in that** the flattened portion at the circumference of the hollow shaft (40) is arranged diametrically to one of the slots and/or **in that** the central point of the circumferential angular region covered by the flattened portion is in the circumferential direction 180° away from the central point of the circumferential angular region covered by one of the slots and/or **in that** the hollow shaft (40) has a constant outer diameter in the axial region covered by the ring part (1) and/or **in that** the axial region covered by the bevel (3, 80, 100) contacts the axial region covered by the collar (41) and/or is adjacent thereto, and/or **in that** the wall thickness and/or the cross-section of the ring part (1) is/are independent of the circumferential angle.

13. A connection according to at least one of the preceding claims, **characterised in that** the bevel is in the form of a conical bevel (3) or in the form of a bevel (80) in the form of a curved taper or in the form of a stepped bevel (100).

14. A connection according to at least one of the preceding claims, **characterised in that** the ring part (1) is spaced apart from the hollow shaft (40) in the axial region covered by the bevel (3, 80, 100), in particular wherein the axial region covered by the bevel (3, 80, 100) adjoins the slotted region of the hollow shaft (40), so that the shrink force of the ring part (1) is applied to the slotted region of the hollow shaft (40), not however to the axial region covered by the bevel (3, 80, 100).

15. A planetary gear motor, wherein the rotor shaft of the electric motor driving the planetary gear is inserted into an input shaft in the form of a hollow shaft (40), wherein a ring part (1) is placed onto the hollow shaft (40), so that the shaft is connected to the hollow shaft (40) by means of the ring part (1) by a connection according to at least one of the preceding claims.

## Revendications

1. Liaison comprenant un arbre emboîté au moins partiellement dans un arbre creux (40) et une pièce annulaire (1), faisant plus précisément partie d'une bague de serrage, emboîtée sur ledit arbre creux (40),
la pièce annulaire (1) étant délimitée axialement par une collerette (41) faisant notamment saillie dans le sens radial, façonnée sur l'arbre creux (40), et/ou ladite pièce annulaire (1) étant en applique contre une, ou contre la collerette (41) faisant notamment saillie dans le sens radial, façonnée sur ledit arbre creux (40),
ledit arbre creux (40) étant muni de fentes, en particulier de fentes axiales situées à distance de ladite collerette (41),
sachant que la pièce annulaire (1) est pourvue d'un chanfrein (3, 80, 100) sur sa face intérieure et/ou au niveau de son ouverture et/ou au niveau de sa région extrême axiale tournée vers la collerette (41),
de sorte que le diamètre intérieur de la pièce annulaire (1) est plus grand, dans la région axiale couverte par ledit chanfrein (3, 80, 100), que le diamètre intérieur dans la région axiale dans laquelle ladite pièce annulaire (1) est en contact avec l'arbre creux (40), **caractérisée par le fait**
**qu'**un nombre impair de renflements dirigés radialement est façonné sur la pièce annulaire, de sorte que le pourtour extérieur de ladite pièce annulaire n'est pas circulaire, lequel nombre est de trois ou plus,
sachant que les renflements (4), et/ou les centres de gravité ou les points centraux desdits renflements (4) déterminés dans la direction périphérique, sont espacés régulièrement les uns des autres dans ladite direction périphérique.

2. Liaison selon la revendication 1,
**caractérisée par le fait que**
l'un des renflements (4) est muni d'un perçage taraudé, continu dans la direction radiale, dans lequel est vissée une pièce vissable (2), en particulier une vis sans tête et/ou une tige filetée qui exerce une pression sur l'arbre creux (40), notamment sur un méplat pratiqué au niveau dudit arbre creux (40).

3. Liaison selon au moins l'une des revendications précédentes,
**caractérisée par le fait que**
tous les renflements (4) se trouvent à la même distance radiale.

4. Liaison selon au moins l'une des revendications précédentes,
**caractérisée par le fait que**
les renflements (4) sont espacés régulièrement les uns des autres dans la direction périphérique.

5. Liaison selon la revendication 2,
**caractérisée par le fait**
**qu'**aucun renflement (4) n'est présent diamétralement à l'opposé du renflement (4) recevant le perçage taraudé.

6. Liaison selon la revendication 2,
**caractérisée par le fait**
**qu'**aucune plage d'angles circonférentiels, couverte par l'un des renflements (4), n'est intégralement englobée par la plage d'angles circonférentiels couverte par la pièce vissable (2) et décalée de 180° dans la direction périphérique.

7. Liaison selon au moins l'une des revendications précédentes,
**caractérisée par le fait que**
tous les renflements (4) présentent la même largeur axiale et la même étendue dans la direction périphérique,
sachant notamment que tous les renflements (4) possèdent la même forme géométrique, à l'exception du renflement (4) recevant le perçage taraudé.

8. Liaison selon au moins l'une des revendications précédentes,
**caractérisée par le fait que**
la largeur radiale de la pièce annulaire (1) est plus grande, dans la plage d'angles circonférentiels couverte par un renflement (4) considéré, que dans une autre plage d'angles circonférentiels.

9. Liaison selon la revendication 2,
**caractérisée par le fait que**
l'espacement radial maximal du renflement (4) recevant le perçage taraudé est supérieur à l'espacement radial maximal respectif de tous les autres renflements (4) ;
et/ou **par le fait que**
la pièce vissable (2) exerce une pression sur un méplat de l'arbre creux (40), à savoir sur une région aplatie, notamment plane, au niveau de la face extérieure dudit arbre creux (40).

10. Liaison selon au moins l'une des revendications précédentes,
**caractérisée par le fait que**
la région axiale, couverte par la région de l'arbre emboîtée dans l'arbre creux, est au moins en chevauchement avec la région axiale couverte par la pièce annulaire ;
et/ou **par le fait que**
ledit arbre creux (40) est pourvu d'une région fendue qui comporte les fentes ;
et/ou **par le fait que**
les fentes dudit arbre creux (40) sont espacées régulièrement les unes des autres dans la direction périphérique.

11. Liaison selon au moins l'une des revendications précédentes,
**caractérisée par le fait que**
les fentes sont dirigées axialement en traversant radialement, de part en part, l'arbre creux et notamment la paroi dudit arbre creux (40) ;
et/ou **par le fait que**
lesdites fentes sont au nombre de trois ou plus.

12. Liaison selon au moins l'une des revendications précédentes,
**caractérisée par le fait que**
le méplat est situé diamétralement à l'opposé de l'une des fentes sur le pourtour de l'arbre creux (40) ;
et/ou **par le fait que**
le point central de la plage d'angles circonférentiels couverte par ledit méplat est éloigné, dans la direction périphérique, de 180° par rapport au point central de la plage d'angles circonférentiels couverte par l'une desdites fentes ;
et/ou **par le fait que**
ledit arbre creux (40) présente un diamètre extérieur constant dans la région axiale couverte par la pièce annulaire (1) ;
et/ou **par le fait que**
la région axiale couverte par le chanfrein (3, 80, 100) est en contact avec la région axiale couverte par la collerette (41), et/ou est limitrophe de ladite région ;
et/ou **par le fait que**
l'épaisseur de paroi et/ou la section transversale de ladite pièce annulaire (1) est (sont) indépendante(s) de l'angle circonférentiel.

13. Liaison selon au moins l'une des revendications précédentes,
**caractérisée par le fait que**
le chanfrein est réalisé sous la forme d'un chanfrein tronconique (3) ou sous la forme d'un chanfrein (80) à courbure tronconique,
ou sous la forme d'un chanfrein étagé (100).

14. Liaison selon au moins l'une des revendications précédentes,
**caractérisée par le fait que**
la pièce annulaire (1) est située à distance de l'arbre creux (40) dans la région axiale couverte par le chanfrein (3, 80, 100),
sachant notamment que ladite région axiale couverte par ledit chanfrein (3, 80, 100) se rattache à la région fendue dudit arbre creux (40), si bien que la force de contraction de ladite pièce annulaire (1) est induite dans ladite région fendue de l'arbre creux (40), mais toutefois pas dans ladite région axiale couverte par ledit chanfrein (3, 80, 100).

15. Moteur à engrenage planétaire
dans lequel l'arbre rotorique du moteur électrique entraînant ledit engrenage planétaire est emboîté dans un arbre d'entrée réalisé sous la forme d'un arbre creux (40),
une pièce annulaire (1) étant emboîtée sur ledit arbre creux (40),
de sorte que ledit arbre est relié audit arbre creux (40), au moyen de ladite pièce annulaire (1), par l'intermédiaire d'une liaison conforme à au moins l'une des revendications précédentes.
